# EUROPÄISCHE PATENTSCHRIFT

(11) **EP 1 714 261 B1**
(45) Veröffentlichungstag und Bekanntmachung des Hinweises auf die Patenterteilung: **20.02.2008**
(21) Anmeldenummer: 05701426.8
(22) Anmeldetag: 04.01.2005
(51) Int. Cl.: G08G 1/0962, G01C 21/20

(54) **VERFAHREN ZUR DECODIERUNG, CODIERUNG UND ÜBERTRAGUNG VON FAHRTROUTENDATEN UND NAVIGATIONSVORRICHTUNG**
METHOD FOR DECODING, ENCODING AND TRANSMITTING ROUTE DATA, AND NAVIGATION DEVICE
PROCEDE DE DECODAGE, CODAGE ET TRANSMISSION DE DONNEES DE ROUTE ET DISPOSITIF DE NAVIGATION

(30) Priorität: 02.02.2004 DE 102004005071
(43) Veröffentlichungstag der Anmeldung: 25.10.2006
(73) Patentinhaber: Robert Bosch GmbH, 70442 Stuttgart (DE)
(72) Erfinder: XU, Yonglong, 31139 Hildesheim (DE)
(86) Internationale Anmeldenummer: PCT/EP2005/050010
(87) Internationale Veröffentlichungsnummer: WO 2005/073940

(56) Entgegenhaltungen:
- DE-A1- 10 014 806
- DE-A1- 10 105 897
- DE-A1- 10 122 448
- DE-A1- 19 644 703
- DUCKECK R ET AL: "TMC (TRAFFIC MESSAGE CHANNEL) DAS VERKEHRSFUNKSYSTEM VON MORGEN" ITG-FACHBERICHTE, VDE VERLAG, BERLIN, DE, Bd. 106, 14. November 1988 (1988-11-14), Seiten 137-145, XP000607384 ISSN: 0932-6022

## Beschreibung

### Stand der Technik

Die Erfindung geht aus von einem Verfahren zur Decodierung und Codierung von Fahrtroutendaten nach der Gattung-der nebengeordneten Ansprüche. Aus der DE 100 14 806 A1 ist bereits ein Verfahren zur Off-Board-Navigation eines Fahrzeugs bekannt. Hierbei wird eine Fahrtroute in einer Zentrale berechnet und in Form aufeinanderfolgender Wegpunkte, die das Fahrzeug auf dem Weg zur Zielposition passieren muss, von der Zentrale an das Fahrzeug übertragen. Die Fahrtroute umfasst dabei mindestens geografische Ortskoordinaten der Wegpunkte, jedoch keine Namensangaben wie Straßennamen oder die Angabe politischer Administrationseinheiten, wie z.B. Ortsnamen, da in diesem Fall die zu übertragenden Routendaten sehr umfangreich waren. Vor allem bei zu übertragenden Fahrtrouten mit Korridoren, die die eigentliche Fahrtroute umgeben, nähme die Menge der zu übertragenden Textdaten in Folge des größeren, zu übertragenden Gebiets ebenfalls stark zu. Folglich erhöht sich bei einer Routenabfrage die Kommunikationsdauer. Damit fallen erhöhte Kommunikationskosten an. Ferner kann auch eine Störung durch einen Verbindungsabriss aufheben, z.B. in Folge eines Funklochs, so dass die Daten ggf. nochmals übertragen werden müssen.

Aus der DE 10105 897 A1 ist ein Verfahren zum Austausch von Navigationsinformationen bekannt, bei dem Navigationsinformation zwischen einem Offboard-Fahrzeugnavigationsgerät und einer Zentrale ausgetauscht werden. Die Zentrale kann hierbei auf eine Datenbank zugreifen, in der Zielführungselemente eindeutig Referenz-IDs zugeordnet sind. Diese Zuordnung dient dazu, aus einer möglicherweise ungenauen Eingabe eines Benutzers mittels einer Rückfrage von der Zentrale zu dem Fahrer auf eindeutige Weise ein Fahrziel zu ermitteln, so dass in der Zentrale eindeutig eine Fahrtroute zu dem Fahrziel berechnet und an das Fahrzeug übertragen werden kann.

Aus der DE 196 44 703 A1 ist ein Verfahren mit einer Einrichtung zum Datenaustausch zwischen einer zentralen Einheit und einer Datenendeinrichtung bekannt. In Abhängigkeit von einer angeforderten Information werden einem Benutzer nunmehr die Daten in einer gewünschten Formatierung übermittelt, beispielsweise bei Hotels jeweils der Hotelname, eine zugehörige Ortsangabe und eine Telefonnummer. Somit kann das in dem entsprechenden Datensatz-Format übermittelte Abfrageergebnis im Endgerät auf einfache Weise verarbeitet werden.

Aus dem Artikel ITG Fachbereichte, VDE Verlag Berlin, Seiten 137-145 XP000607384, Duckeck et al "TMC (Traffic Message Channel), das Verkehrsfunksystem von Morgen" ist eine Kodierung von Verkehrsmeldungen derart bekannt, dass unhörbar eine Zusatzinformation zu dem UKW Hörrundfunk mit übertragen wird. Damit ist es möglich, eine große Gruppe von Autofahrern auf Verkehrstörungen im Sendgebiet hinzuweisen. Eine Zuordnung einer Verkehrstörung erfolgt über eine Auflösung mittels einer im Fahrzeug vorhandenen Datenbank bei der Ortskennzahlen jeweils einem Ort zugeordnet sind.

### Vorteile der Erfindung

Das erfindungsgemäße Verfahren zur Decodierung von Fahrtroutendaten mit den Merkmalen des Anspruchs 1 hat demgegenüber den Vorteil, dass der Vorrichtung im Fahrzeug eine Route mit codierten Textdatensätzen, wie z.B. Straßennamen und politischen Administrationseinheiten, zu Verfügung gestellt wird, wobei die Route z.B. eine auf Wegepunkten basierende Route oder auch eine Korridorroute sein kann. Die Decodierung derartiger codierter Textdabensätze erfolgt in der Vorrichtung im Fahrzeug anhand einer in einer Speichereinheit geladenen Zuordnungstabelle, in der jedem Textdatensatz eindeutige ein Code zugeordnet wird. Indem nicht die gesamten Textinformationen in Textform, sondern lediglich deren entsprechende Codes übertragen werden, wird die übertragene Datenmenge deutlich verringert, so dass der Speicherbedarf für die Route sowie die Übertragungszeit und die Übertragungskosten für eine Routenabfrage verringert werden. Durch die verringerte, zu übertragende Datenmenge kann auch die Übertragungssichemeit erhöht werden, da eine Verbindung nur noch für einen kürzeren Zeitraum der Datenübertragung benötigt wird. Gegebenfalls wird es durch diese Verringerung der Datenmenge erst ermöglicht, dem Fahrer überhaupt entsprechende Zusatzinformationen wie Ortsnamen oder sogar Zusatzinformationen zu Orten oder Ortsbereichen anbieten zu können, so dass eine Orientierung des Fahrers erheblich verbessert wird.

Durch die in den Unteransprüchen aufgeführten Maßnahmen sind vorteilhafte Weiterbildungen und Verbesserungen des im Hauptanspruch angegebenen Verfahrens möglich. Besonders vorteilhaft ist, dass die Zusatzinformationen in Textform entsprechend der politischen Adminisirationshierarchie vorgesehen sind, z.B. Regierungsbezirk, Kreis, Stadt, Gemeinde, und gegebenenfalls auch anderweitige Ortsbezeichnungen umfassen. Entsprechende Textdaten werden jedoch nur codiert mit übertragen. Bei einer entsprechenden Sprachenauswahl ist es daher auch möglich, die Ortsbezeichnungen, die durch den Code eindeutig bestimmt sind, in einer gewünschten Sprache auszugeben.

Es ist ferner vorteilhaft, die Zuordnung zwischen den Codes und den Textinformationen in einer Zuordnungstabelle über eine Funkschnittstelle zu aktualisieren, so dass stets eine aktuelle Zuordnungstabelle im Fahrzeug zur Verfugung stehen. Eine solche Aktualisierung kann durch eine Dienstezentrale ausgelöst werden, wenn dort ebenfalls einer Änderung der Zuordnungsvorschrift für das Codieren erfolgt ist

Es ist ferner vorteilhaft, dass eine Fahrtroute Straßenabschnitte, Entscheidungspunkte und/oder administrative Einheiten umfasst. Unter Entscheidungspunkten sind hierbei Auffahrten, Ausfahrten, Kreiseln und Straßenkreuzungen zu verstehen, an denen gegebenenfalls von der gerade befahrenen Straße abgebogen werden muss. Die Fahrtroute kann vorteilhaft zusammen mit einem Korridor übertragen werden, der eine Umgebung der Fahrtroute in einem vorgegebenen Abstand mit einschließt In einer weiteren Ausführungsform kann auch lediglich der Korridor oder eine Straßenkarte für ein spezifiziertes Gebiet übertragen werden, so dass eine Fahrtroutenberechnung innerhalb des Korridors oder des übertragenen Gebietes in einer sonstigen Form erst im Fahrzeug erfolgt.

Es ist ferner vorteilhaft, die in einer Speichereinheit im Fahrzeug vorgespeicherte Zuordnungsvorschrift, insbesondere in Form einer Zuordnungstabelle, dazu zu nutzen, bei einer mehrdeutigen Eingabe eines Fahrziels eine Auswahl aus verschiedenen, mehrdeutigen Fahrzielen zu treffen. Damit kann eine doppelte Nutzung dieser Zuordnungstabelleerreicht werden, indem einerseits nach der Decodierung eine vorteilhafte, informative Ausgabe erreicht wird, die die Orientierung des Fahrers erleichtert, und andererseits eine Eingabe eines Fahrziels vereinfacht wird.

### Zeichnung

Ausführungsbeispiele sind in der Zeichnung dargestellt und in der nachfolgenden Beschreibung näher erläutert. Es zeigen
Figur 1 eine erfindungsgemäße Navigationsvorrichtung zur Durchführung des erfindungsgemäßen Verfahrens,
Figur 2 ein Ausführungsbeispiel für eine Anzeigendarstellung nach einer erfindungsgemäßen Übertragung von Fahrtroutendaten,
Figur 3 ein Ausführungsbeispiel für eine Zuordnungstabelle zwischen Codes und Textdaten.

### Beschreibung des Ausführungsbeispiels

Es wird ein Verfahren zur Decodierung und zur entsprechenden Codierung für eine Übertragung von Navigationsroutendaten von einer Zentrale an eine Vorrichtung zur Ausgabe von Fahrhinweisen in einem Fahrzeug beschrieben. Die Textdatensätze, insbesondere Straßennamen und politische Administrationseinheiten, die in den Navigationsroutendaten enthalten sind, werden anhand einer Zuordnungstabelle in einer Zentrale codiert und danach mit übertragen. In der Zuordnungstabelle wird jedem Textdatensatz (z.B. einem Namen) ein eindeutiger Code zugewiesen. Die Decodienmg von Codes zur Textausgabe von Textdatensätzen erfolgt anhand der gleichen und im Vorfeld in eine dazu vorgesehenen Speichereinheit geladene Zuordnungstabelle in der Vorrichtung in dem Fahrzeug.

Das erfindungsgemäße Verfahren zur Decodierung von Fahrtroutendaten kann für eine Decodierung von Fahrtroutendaten in beliebigen Fahrzeugen verwendet werden. Bevorzugt werden die codierten Daten hierzu an das Fahrzeug über eine Funkschnittstelle übertragen. Im Folgenden ist das erfindungsgemäße Verfahren am Beispiel einer Verwendung für ein Kraftfahrzeug erläutert, das sich in einem Wegenetz bewegt, das insbesondere Straßen aufweist.

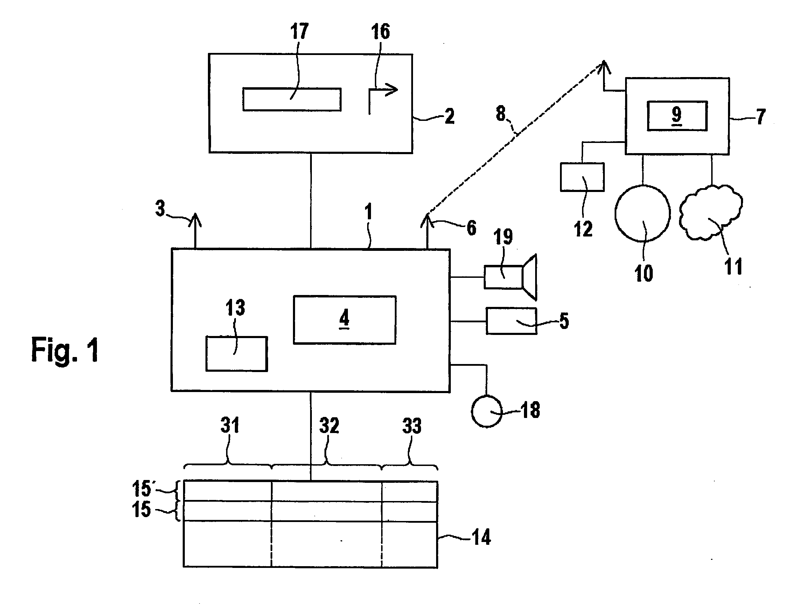

In der Figur 1 ist eine Navigationsvorrichtung 1 dargestellt, die in einem Kraftfahrzeug angeordnet ist. Die Navigationsvorrichtung 1 ist mit einer Anzeigeeinheit 2 verbunden, die der Ausgabe von Fahrhinweisen an den Fahrer des Fahrzeugs dient Ferner weist die Navigationsvorrichtung 1 eine Ortungseinheit 3 auf, die insbesondere als eine Satellitenortungseinheit zur Positionsbestimmung ausgeführt ist Eine Recheneinheit 4 steuert die Navigationsvorrichtung 1. Über eine Eingabeeinheit 5 wählt ein Benutzer ein Fahrziel aus. Mittels der Ortungseinheit 3 wird eine aktuelle Position des Fahrzeugs bestimmt. Als Startpunkt wird die aktuelle Position und als Zielpunkt das eingegebene Fahrziel an eine Dienstezentrale 7 über eine Funkverbindung 8 übertragen.

Die Funkverbindung 8 ist insbesondere als eine Mobilfunkverbindung ausgeführt Ferner ist es auch möglich, die Funkverbindung 8 als einen drahtlosen Datennetzanschluss, z.B. einem Internetanschluss, gegebenenfalls aber auch als eine drahtgebunde Datenverbindung auszuführen.

Die Dienstezentrale 7 weist eine Recheneinheit 9 auf, die unter Zugriff auf einen Datenspeicher 10 mit Straßenkartendaten eine Fahrtroute von dem Startpunkt zu dem Fahrziel bestimmt Gegebenenfalls kann die Dienstezentrale 7 z.B. auf ein Datennetz 11 zugreifen, um auch aktuelle Informationen, wie z.B, die Wetterlage oder eine Verkehrslage, mit in die Routenberechnung einzubeziehen. Die Fahrtroute wird dabei derart berechnet, dass die Recheneinheit 9 eine Abfolge von Entscheidungspunkten und/oder Straßenabschnitten bestimmt, entlang derer das Fahrzeug fahren soll. Anschließend wird von der Dienstezentrale 7 die Fahrtroute gegebenenfalls zusammen mit weiteren Straßenkartendaten, z.B. mit einem Korridor um die Fahrtroute herum oder mit einem jeweiligen ergänzenden Kartengebiet um den Startpunkt oder/und um das Fahrziel herum, an die Navigationsvorrichtung 1 zur weiteren Verarbeitung der Fahrtroutendaten übertragen. In einer weiteren Ausführungsform ist es auch möglich, dass anstelle einer Fahrtroute lediglich Straßenkartendaten für ein spezifiziertes Gebiet, von der Dienstezentrale 7 an die Navigationsvorrichtung 1 im Fahrzeug übertragen werden.

Die Fahrtroute ist hierbei zunächst durch eine Abfolge von Wegepunkten und Entscheidungspunkten gekennzeichnet. Um dem Fahrer die Orientierung zu erleichtern, sollen die Fahrtroutendaten auch z.B. Bezeichnungen von Entscheidungspunkten, Straßenabschnitten und/oder Orten sowie dazugehörige, ergänzende Attribute umfassen, wobei die Positionen der Entscheidungspunkten, Straßenabschnitten und/oder Orten durch geografische Koordinaten beschrieben werden. Die Bezeichnungen sollen dem Fahrer jedoch in Textform angezeigt werden. Hierzu weist die Dienstezentrale 7 eine Zuordnungstabelle 12 auf, die Zuordnungen von Codes zu Textdatensätzen enthält, also z.B. Straßennamen, Postleitzahl, Ortsnamen und Bezeichnungen sonstiger Administrationseinheiten. Hierbei ist den Namen jeweils ein Code derart zugeordnet, dass einem Code eindeutig ein Name zugeordnet werden kann. Wenn ein Name räumlich häufiger vorkommt, so ist es ausreichend, wenn für diesen Namen lediglich ein Code vorgesehen ist Bei dem Code kann es sich z.B. um eine Zahl bzw. um eine Zahlfolge handeln.

In einer weiteren Ausführungsform sind die Straßenkartendaten so abgelegt, dass statt über Textdaten über Codes auf die entsprechenden Geometrien, also Straßenabschnitte und Administrationseinheiten, verwiesen wird, während an den Geometrien statt deren Textbezeichnungen die Verweise auf die jeweiligen Codes in der Zuordnungstabelle als Attribute angehängt werden. Darüber hinaus können weitere Informationen, wie z.B.

Hinweise auf touristische Sehenswürdigkeiten oder kommerzielle Einrichtungen in der Zuordnungstabelle 12 abgelegt sein.

Durch die geografischen Koordinaten, die gegebenenfalls auch kodiert übertragen werden können, ist eine eindeutige Zuordnung von Orten, Straßenabschnitten, und Entscheidungspunkten in einem Wegenetz oder in einem Kartenbereich möglich. Zusätzlich kann zusammen mit den geografischen Koordinaten, insbesondere bei Straßenabschnitten, eine Richtungs- und/oder eine Längeninformation als Attribut mit übertragen werden. Hierdurch können die Straßenabschnitte als einzelne Vektoren übertragen und somit aus einer Vektorkette eine Wegestrecke hergeleitet werden.

Aus den Wegepunkten und den Codes für die Textbezeichnungen werden damit Fahrtroutendaten von der Dienstezentrale 7 erstellt, die über eine Funkverbindung 8 an eine Funkschnittstelle 6 der Navigationsvorrichtung 1 übertragen werden.

In der Navigationsvorrichtung 1 werden die übertragenen Daten nun decodiert. Erfindungsgemäß befindet sich in der Navigationsvorrichtung 1 eine Speichereinheit, die ebenfalls eine Zuordnungstabelle 14 speichert, welche der Zuordnungstabelle 12 in der Zentrale entspricht und über ein Datennetz, z.B. das Internet, über die Funkschnittstelle 6 oder über die Zuführung mittels einem Speichermedium an die Speichereinheit übertragen wurde. In der Zuordnungstabelle 14 ist ein Namensverzeichnis insbesondere von Straßennamen, Ortsnamen und sonstigen Administrationseinheiten abgelegt, wobei die Namen jeweils den entsprechenden Codes zugeordnet sind. Darüber hinaus können weitere Informationen, wie z.B. Hinweise auf touristische Sehenswürdigkeiten oder kommerzielle Einrichtungen, in der Zuordnungstabelle 14 abgelegt sein

In einer ersten Spalte 31 sind die jeweiligen Codes abgelegt, denen in einer zweiten Spalte 32 jeweils Textinformationen zugeordnet sind. Für jeden Code sind einzelne Zeilen 15,15' in der Zuordnung vorgesehen. In einer weiteren, dritten Spalte 33 können für die jeweiligen Codes weitere Parameter abgelegt sein, die für eine Ausgabe der Textinformation, die dem jeweiligen Code zugeordnet ist, mit berücksichtigt werden. Dies können z.B. Informationen über eine Kategorie der jeweiligen Textinformation sein, also z.B. Informationen darüber, ob es sich um einen Städtenamen oder um einen touristischen Hinweis handelt. Wünscht ein Benutzer, den jeweiligen Landkreis eines angezeigten Ortes mit auszugeben, so kann in dem entsprechenden Parametereintrag in der dritten Spalte 33 ein Eintrag vorgesehen sein, dass es sich bei dem jeweiligen Code um den Namen eines Landkreises handelt. Der Landkreisname würde in diesem Fall ausgegeben. Will z.B. geeignet ein Benutzer die Ausgabe des Landkreisnamens unterdrücken, so sorgt der Parameter in der dritten Spalte 33 dafür, dass der Landkreisname nicht ausgegeben wird.

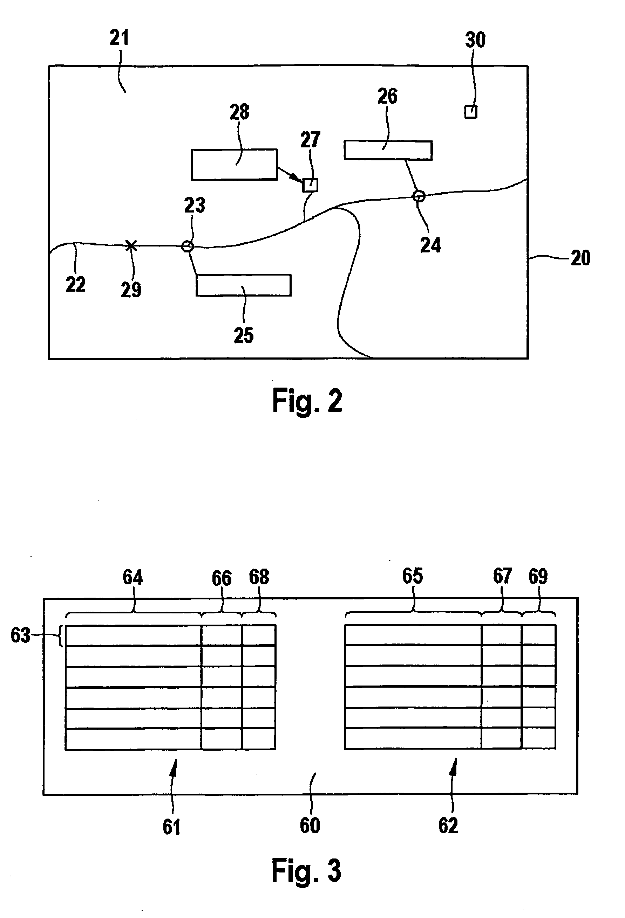

In der Figur 3 ist ein weiteres Ausführungsbeispiel für einen Datensatz 60 einer derartigen Zuordnungsstabelle gezeigt. Bei dem hier dargestellten Ausführungsbeispiel sind in einem ersten Datensatz 61 Ortsbezeichnungen von Städten, Stadtteilen und Gemeinden und in einem zweiten Datensatz 62 Straßennamen aufgelistet. Jede Zeile 63, von denen aus Gründen der Übersichtlichkeit nur eine bezeichnet ist, ist ein Namen zugeordnet. In einer ersten Spalte 64 des ersten Datensatzes 61 sind die Ortsnamen und in einer ersten Spalte 65 des zweiten Datensatzes 62 die Namen der Straßenbezeichnungen eingetragen. In einer zweiten Spalte 66 des ersten Datensatzes sind Zusatzinformationen zu den jeweiligen Namen in der ersten Spalte 64 gespeichert. Diese Zusatzinformationen können zum Beispiel Informationen darüber sein, ob es mehrere Orte mit diesen Namen gibt und in welchen Gebieten diese Orte jeweils liegen. Dies sind zum Beispiel Informationen über den Staat und/oder die Postleitzahl des jeweiligen Ortes. In einer zweiten Spalte 67 des zweiten Datensatzes 62 sind Zeiger auf die jeweiligen Orte des ersten Datensatzes 61 abgelegt, in denen der jeweilige Straßenname auftritt. In einer bevorzugten Ausführungsform braucht der Straßenname dabei nur einmal in den zweiten Datensatz 62 aufgenommen zu werden, so dass eine die Zuordnung zu einem Ort dann über den in der zweiten Spalte 67 abgelegten Zeiger erfolgt. Erfindungsgemäß ist in der dritten Spalte 68 des ersten Datensatzes ein Code für den jeweiligen Ortsnamen und in der dritten Spalte 69 des zweiten Datensatzes 62 ein Code für den jeweiligen Straßennamen abgelegt. Der Datensatz 60 kann dabei sowohl für die Codierung, als auch für die Decodierung verwendet werden.

Ferner können in einem weiteren, nicht gezeigten Datensatz Einrichtungen, einschließlich zugeordneter Codes, wie z.B. Hotels und Restaurants mit Kategorienangaben und Zeiger auf die jeweiligen Orte des ersten Datensatzes 61 aufgelisbet sein.

Wird an die Navigationsvorrichtung 1 auf diese Weise eine Fahrtroute übertragen, so werden die Fahrtroutendaten in einem Speicher 13 der Navigationsvorrichtung abgelegt. Die Recheneinheit 4 bestimmt hieraus die Fahranweisungen, die über die Anzeigeeinheit 2 ausgegeben werden. Die Fahranweisungen können z.B. in Form von Abbiegehinweisen 16 in Symbolform oder in Form von Texthinweisen 17 ausgegeben werden. Ferner ist auch eine akustische Ausgabe von Fahrhinweisen über einen Lautsprecher 19 möglich. Zusammen mit den Fahrhinweisen oder mit einer Kartendarstellung können die Zusatzinformationen, die aus diesen Codes über die Zuordnungstabelle 14 ermittelt werden, mit ausgegeben werden. Ein Ausführungsbeispiel für eine entsprechende Anzeige ist in der Figur 2 dargestellt.

In der Figur 2 ist eine Anzeigendarstellung 20 in der Anzeigeeinheit 2 dargestellt. Hierbei ist ein Straßenkartenabschnitt 21 mit Straßen 22 gezeigt, an denen Orte 23, 24 eingetragen sind. Ergänzend ist zu den Orten jeweils ein Textfeld 25, 26 dargestellt, in dem bei dem hier dargestellten Ausführungsbeispiel jeweils der Ortsname und der Landkreis des jeweiligen Ortes angezeigt wird. Der Benutzer kann sich somit über den Ort und den Landkreis des jeweiligen Ortes informieren. Die Ortsnamen des Ortes und des Landkreises müssen sowohl in der jeweiligen Zuordnungstabelle 14 für die Decodierung, als auch in der Zuordnungstabelle 12 für die Codierung abgelegt worden sein. Bei der Übertragung des Straßenkartenabschnittes werden die entsprechenden Codes der Orte 23, 24 für den Ortsnamen mit übertragen, die dann mittels der Recheneinheit 4 für die Erzeugung der Anzeigendarstellung 20 zurückgewonnen werden. Ergänzend ist es möglich, z.B. auch für ein touristisches Ziel 27, das abseits der Straße 22 liegt, eine Zusatzinformation 28 in Textform mittels der entsprechenden Zuordnung zwischen einem Code und der Textinformation zu erreichen.

Ob die Textinformation über einem Ort dargestellt wird, kann davon abhängig gemacht werden, wie weit der jeweilige Ort von der von dem Fahrzeug befahrenen Straße 22 entfernt ist Ergänzend kann in der Anzeigendarstellung 20 auch die Fahrzeugposition 29 eingetragen werden. Ist ein Ort z.B. zu weit von der Straße 22 entfernt, kann gegebenenfalls lediglich ein Hinweis auf den Ort 30 dargestellt werden, ohne die Zusatzinformation in Textform einzublenden. Gegebenenfalls kann die Einblendung der Zusatzinformation auch von einer Benutzerauswahl abhängig gemacht werden.
Deaktiviert z.B. ein Benutzer die Anzeige eines Landkreises, wird die Anzeige dieser Textinformation unterdrückt. Ferner kann ein Benutzer auch gegebenenfalls Textinformationen nach vorgegebenen Kategorien anfordern. So kann er z.B. in die Karte jeweils die Namen von Hotels eintragen lassen, deren Position zusammen mit einem entsprechenden Code für die Bezeichnung der Hotels und gegebenenfalls für Zusatzinformationen von der Zentrale an die Navigationsvorrichtung 1 übermittelt wurde.

Um Speicherplatz in der Navigationsvorrichtung 1 zu sparen, ist es vorgesehen, dass für einen Namen, der unterschiedlich, aber gleichlautende Orte gegebenenfalls der gleichen Kategorie bezeichnet, nur ein Code in der Zuordnungstabelle abgelegt ist. Beiden Orten unterschiedlicher geografischer Positionen wird dann ein Code für die Ausgabe der Zusatzinformationen zugeordnet.

In einer weiteren Ausführungsform kann im Fall einer solchen Mehrdeutigkeit die Zuordnungstabelle 14 im Fahrzeug bereits bei der Eingabe eines Fahrziels verwendet werden. Mehrdeutige Ortsnamen können durch entsprechende, erläuternde Attribute gekennzeichnet werden. Durch einen Dialog der Navigationsvorrichtung 1 mit dem Benutzer können eventuell auftretende Mehrdeutigkeiten unter Verwendung der Zuordnungstabelle 14 aufgelöst werden, so dass bereits ein eindeutig bestimmtes Fahrziel an die Dienstezentrale 7 übertragen wird.

Da sich die Zusatzinformationen gegebenenfalls ändern können bzw. sich das von einem Benutzer gewünschte Kartengebiet vergrößern kann, ist es besonders vorteilhaft, die Zuordnungstabelle 14 über die Funkschnittstelle 6 der Navigationsvorrichtung 1 zu aktualisieren. Gegebenenfalls kann eine Aktualisierung auch über einen Austausch des Speichermediums 18 erfolgen. Gegebenenfalls ist es erforderlich, den Datenstand zwischen der Zuordnungstabelle und der Zentrale abzugleichen, indem z.B. eine Abfrage über den Stand des Datums der Zuordnung, z.B. über eine Versionsnummer, erfolgt. Eine inhaltliche Veränderung der Zuordnungstabelle in der Dienstezentrale 7 erfordert es, die entsprechende Zuordnungstabelle 14 in der Navigationsvorrichtung 1 zu aktualisieren. Sollte im Fahrzeug, z.B. bei einem neuen Straßennamen, kein Text für einen Code hinterlegt sein, so kann der neue Straßenname nicht angezeigt werden. Bei einer fehlenden Aktualisierung ist daher ggf. nur eine eingeschränkte oder ggf. sogar fehlerhafte Funktion möglich.

Die Angabe der Zusatzinformationen ist nicht auf die bisher dargestellten Ausführungsformen beschränkt. Es können auch längere, informative Zusatztexte durch entsprechende Codierungen aus der Zuordnungstabelle abgerufen werden.

## Patentansprüche

1. Verfahren zur Decodierung von Fahrtroutendaten mit codierten Textdatensätzen zur Ausgabe von Fahrhinweisen zur Führung eines Fahrzeugs entlang einer Fahrtroute, wobei die Decodierung in einer Vorrichtung in einem Fahrzeug anhand einer in eine Speichereinheit geladener Zuordnungstabelle (14) erfolgt, in der jedem Textdatensatz eindeutig ein Code zugeordnet ist, wobei Codes mittels der Zuordnungstabelle (14) durch Textdatensätze ersetzt werden, wobei die Zuordnungstabelle (14) über eine Funkschnittstelle (6) aktualisiert wird.

2. Verfahren nach Anspruch 1, **dadurch gekennzeichnet, dass** die Textdatensätze Ortsbezeichnungen, insbesondere Straßennamen und/oder Ortsnamen, umfassen.

3. Verfahren nach einem der vorherigen Ansprüche, **dadurch gekennzeichnet, dass** die Fahrtroutendaten Straßenabschnitte, Entscheidungspunkte und/oder administrative Einheiten umfassen.

4. Verfahren nach einem der vorherigen Ansprüche, **dadurch gekennzeichnet, dass** die Fahrtroutendaten über eine Funkschnittstelle (6) an die Vorrichtung (1) zur Ausgabe von Fahrhinweisen übertragen werden.

5. Verfahren nach einem der vorherigen Ansprüche, **dadurch gekennzeichnet, dass** mit den Fahrtroutendaten eine Fahrtroute und/oder ein Korridor um eine Fahrtroute übertragen und/oder Straßenkartendaten für ein ausgewähltes Gebiet übertragen werden.

6. Navigationsvorrichtung in einem Fahrzeug mit einer Funkschnittstelle (6) zum Empfangen von Fahrtroutendaten, mit einer in einer Speichereinheit abgelegten Zuordnungstabelle (14) zur Zuordnung zwischen empfangenen Codes und Textdatensätzen, die in der Speichereinheit abgelegt sind, mit einer Ausgabeeinheit (2, 19) zur Ausgabe von Fahrhinweisen zur Führung des Fahrzeugs entlang der Fahrtroute und mit einer Funkschnittstelle (6) zur Aktualisierung der Zuordnungstabelle (14).

7. Navigationsvorrichtung nach Anspruch 6, **gekennzeichnet durch** eine Speichereinheit (18) für Straßenkartendaten.

8. Navigationsvorrichtung nach einem der Ansprüche 6-7, **gekennzeichnet durch** eine Ausgabeeinheit (2) zur Ausgabe von Zusatzinformationen (25, 26, 28) in Textform.

## Claims

1. Method for decoding journey route data with encoded text data records for the output of driving advice for guiding a vehicle along a journey route, where the decoding takes place in an apparatus in a vehicle using an association table (14) loaded into a memory unit, said association table containing a code explicitly associated with each text data record, where codes are replaced by text data records by means of the association table (14), the association table (14) being updated via a radio interface (6).

2. Method according to Claim 1, **characterized in that** the text data records comprise location descriptors, particularly road names and/or location names.

3. Method according to one of the preceding claims, **characterized in that** the journey route data comprise road sections, decision points and/or administrative units.

4. Method according to one of the preceding claims, **characterized in that** the journey route data are transmitted to the apparatus (1) via a radio interface (6) for the purpose of outputting driving advice.

5. Method according to one of the preceding claims, **characterized in that** the journey route data are transmitted accompanied by a journey route and/or a corridor around a journey route, and/or roadmap data for a selected area are transmitted.

6. Navigation apparatus in a vehicle having a radio interface (6) for receiving journey route data, having an association table (14), stored in a memory unit, for associating received codes and text data records which are stored in the memory unit, having an output unit (2, 19) for outputting driving advice for guiding the vehicle along the journey route, and having a radio interface (6) for updating the association table (14).

7. Navigation apparatus according to Claim 6, **characterized by** a memory unit (18) for roadmap data.

8. Navigation apparatus according to one of Claims 6-7, **characterized by** an output unit (2) for outputting supplementary information (25, 26, 28) in text form.

## Revendications

1. Procédé de décodage de données de trajet comportant des jeux de données de texte, codes, pour émettre des indications de conduite pour guider un véhicule le long d'un trajet, le décodage se faisant dans un dispositif équipant un véhicule à l'aide d'un tableau d'association (14) chargé dans une unité de mémoire, et dans lequel à chaque jeu de données de texte est associé de manière univoque un code, et selon lequel les codes sont remplacés selon le tableau d'association (14) par des jeux de données de texte,
le tableau d'association (14) étant actualisé par l'intermédiaire d'une interface radio (6).

2. Procédé selon la revendication 1,
**caractérisé en ce que**
les jeux de données de texte comprennent des désignations de lieux, notamment des noms de rues et/ou des noms de localités.

3. Procédé selon l'une des revendications précédentes,
**caractérisé en ce que**
les données de trajet comprennent des segments de trajet, des points de décision et/ou des unités administratives.

4. Procédé selon l'une des revendications précédentes,
**caractérisé en ce que**
les données de trajet sont transmises par une interface radio (6) au dispositif (1) pour émettre des indications de conduite.

5. Procédé selon l'une des revendications précédentes,
**caractérisé en ce qu'**
avec les données de trajet on transmet un trajet et/ou un couloir autour du trajet et/ou on transmet les données de cartes routières pour un domaine sélectionné.

6. Dispositif de navigation pour un véhicule comprenant une interface radio (6) pour recevoir des données de trajet, un tableau d'association (14) enregistré dans une unité de mémoire pour associer les codes reçus et les jeux de données de texte enregistrés dans l'unité de mémoire, une unité d'émission (2, 19) pour émettre des indications de trajet pour guider le véhicule le long du trajet et une interface radio (6) pour actualiser le tableau d'association (14).

7. Dispositif de navigation selon la revendication 6,
**caractérisé par**
une unité de mémoire (18) pour des données de cartes routières.

8. Dispositif de navigation selon l'une des revendications 6 et 7,
**caractérisé par**
une unité d'émission (2) pour émettre des informations supplémentaires (25, 26, 28) sous la forme d'un texte.
